# EUROPEAN PATENT APPLICATION

(11) **EP 1 582 878 A1**
(43) Date of publication of application: **05.10.2005**
(21) Application number: 05251060.9
(22) Date of filing: 23.02.2005
(51) Int. Cl.: G01P 15/08, G01P 15/12, G01P 15/18

(54) **Intertial sensor**

(30) Priority: 30.03.2004 JP 2004099250
(71) Applicant: Fujitsu Media Devices Limited, Kanagawa 222-0033 (JP); FUJITSU LIMITED, Kanagawa 211-8588 (JP)
(72) Inventor: Ishikawa, Hiroshi c/o Fujitsu Limited, Kawasaki-shi Kanagawa 211-8588 (JP); Nakamura, Yoshitaka, c/o Fujitsu Media Devices Ltd, Yokohama-shi, Kanagawa 222-0033 (JP); Tokunaga, Hiroshi, c/o Fujitsu Media Devices Ltd., Yokohama-shi, Kanagawa 222-0033 (JP); Nagata, Kenji, c/o Fujitsu Media Devices Ltd., Yokohama-shi, Kanagawa 222-0033 (JP)
(74) Representative: Hitching, Peter Matthew

(57) **Abstract**

An inertial sensor comprising a sensing portion having a weight (12) hung by beams (13) extending from a frame (14), the weight being a movable portion. The beams include distortion portions partially arranged therein, and the distortion portions are arranged to avoid edges on which stresses applied to the beams are concentrated. Roots of the beams (R) are not formed at right angle in connecting to the weights or the frame. The roots of the beams have wider angles. It is thus possible to dissipate areas on which stresses are concentrated and improve the impact resistance without sacrificing the sensor sensitivity. Both high sensor sensitivity and the impact resistance are obtainable in accordance with the present invention.

## Description

### BACKGROUND OF THE INVENTION

### 1. Field of the Invention

This invention generally relates to an inertial sensor such as an acceleration sensor and a gyro sensor, and more particularly, to an inertial sensor having an excellent sensitivity and impact resistance.

### 2. Description of the Related Art

In these years, the inertial sensor such as the acceleration sensor and the gyro sensor can realize downsizing, high performance, and low price all together, thanks to the advancement in a fine processing technology to which MEMS (Micro Electro Mechanical System) technique is applied. With this background, the inertial sensor as a MEMS device is expected to be mounted on every device that senses movements for the purpose of car navigation, automotive air-bag control, avoidance of jiggling a camera or camcorder, robot posture control, gesture input recognition for a game, and detection of HDD rotation and shock applied to HDD. A higher sensitivity is demanded by the inertial sensor mounted on the above-mentioned device.

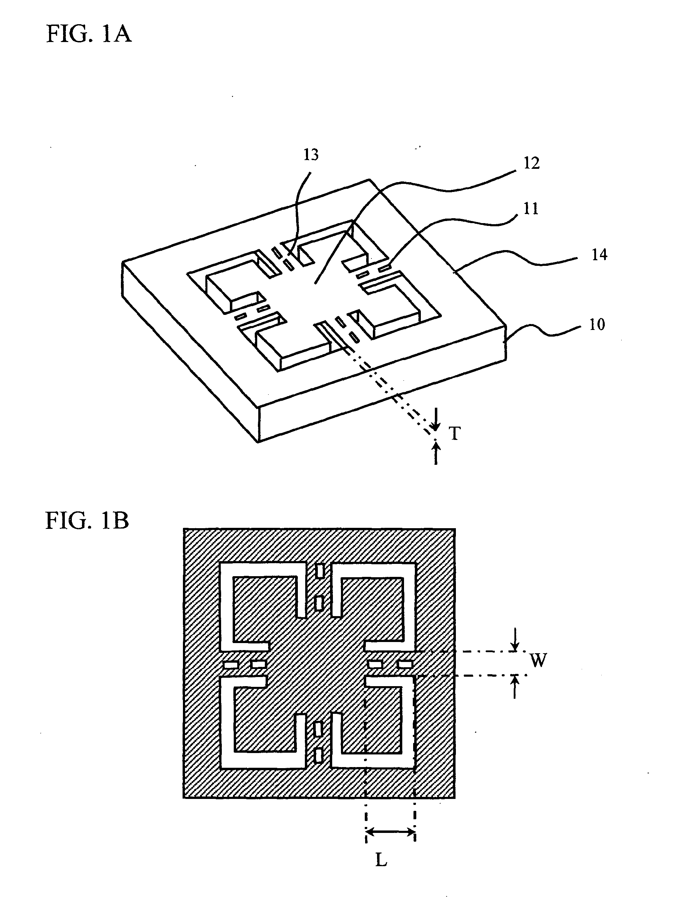

Figs. 1A and 1B illustrate main members of a general inertial sensor of a fundamental structure in which a weight is a movable portion and is hung with beams. Fig. 1A is a perspective view of a sensing portion. Fig. 1B is a top view of the sensing portion. In Figs. 1A and 1B, the inertial sensor includes a substrate 10, piezoelectric resistors 11, a weight 12, multiple beams 13, and a frame 14. The substrate 10 is used for forming the sensing portion of the inertial sensor. The piezoelectric resistors 11 are incorporated into the substrate 10. The weight 12 is the moveable portion of the sensing portion. The multiple beams are provided to support the movement of the weight 12. The frame 14 holds the weight 12 and the beams 13. W is a width of the beam 13, T is a thickness of the beam 13, and L is a length of the beam 13. When the weight 12 that is the movable portion moves, the movement becomes a twist or distortion and changes the resistance values of the piezoelectric resistors 11 provided on the beams 13. Thus changed resistance values are obtained as an electric signal of output in a Wheatstone bridge circuit.

An unexpected big impact is sometimes applied to the device that detects the movements. Therefore, there is a possibility that the big impact is applied to the inertial sensor mounted on the above-mentioned device. A common inertial sensor has a fundamental structure including the weight, which is the movable portion, hung by the beams. In the case where the big impact is accidentally applied to the device, there is a known problem in that the beam is significantly distorted or damaged and the device no longer serves as a sensor, as described in Japanese Patent Application Publication No. 2000-187041 (hereinafter referred to as Document 1). For instance, with respect to the inertial sensor used for an automobile such as a vehicle air bag, if a car crushes or overturns, the big impact, never happening during the normal driving, will be possibly applied. If a mobile device is mistakenly dropped, the big impact can be easily imagined. If a user roughly handles a game console for a hobby use, an extremely big impact will be applied to the game console. The above-mentioned accidental and unexpected impact is considered 3000 G or 5000 G, and a high impact resistance is demanded by the inertial sensor mounted on the above-mentioned device.

In order to improve the sensitivity of the inertial sensor having the common structure shown in Fig. 1, it is considered that the width W of the beam 13 is made narrower, the thickness T is made thinner, the length L is made longer, or the weight 12 is made heavier. However, generally, the sensor sensitivity has a reverse proportional relationship with the impact resistance. Therefore, in the case where the sensor sensitivity is improved by the above-mentioned method, the impact resistance is inevitably decreased. In contrast, in the case where the shape of the beam 13 and the weight of the weight 12 are designed to improve the impact resistance of the sensor, the sensor sensitivity is decreased. As described, there is a problem in that the high sensitivity and the impact resistance of the inertial sensor cannot be obtained together.

### SUMMARY OF THE INVENTION

The present invention has been made in view of the above-mentioned circumstances and it is a general object of the present invention to provide an inertial sensor having beams, with which high sensitivity and impact resistance can be obtained together.

According to an aspect of the present invention, preferably, there is provided an inertial sensor includes a sensing portion having a weight hung by beams extending from a frame, the weight being a movable portion. The beams include distortion portions partially arranged therein, and the distortion portions are arranged to avoid edges on which stresses applied to the beams are concentrated.

According to another aspect of the present invention, preferably, there is provided an inertial sensor including a sensing portion having a weight hung by beams, the weight being a movable portion. The beams have given areas in edges thereof having angles wider than a right angle.

In accordance with the present invention, the distortion portions such as convex portions, holes, or narrow width portions, are arranged to avoid edges on which stresses applied to the beams are concentrated. The distortion portions are appropriately provided. It is thus possible to enhance the sensor sensitivity without degrading the impact resistance of the sensor.

Additionally, in accordance with the present invention, roots of the beams are not formed at right angle in connecting to the weights or the frame. The roots of the beams have wider angles. It is thus possible to dissipate areas on which stresses are concentrated and improve the impact resistance without sacrificing the sensor sensitivity. Both high sensor sensitivity and the impact resistance are obtainable in accordance with the present invention.

### BRIEF DESCRIPTION OF THE DRAWINGS

Preferred embodiments of the present invention will be described in detail with reference to the following drawings, wherein:
Figs. 1A and 1B illustrate main members of a general inertial sensor having a fundamental structure in which a weight is a movable portion and is hung with beams;
Fig. 1A is a perspective view of a sensing portion;
Fig. 1B is a top view of the sensing portion;
Figs. 2A and 2B illustrate how the beam is distorted when the impact is applied to the inertial sensor;

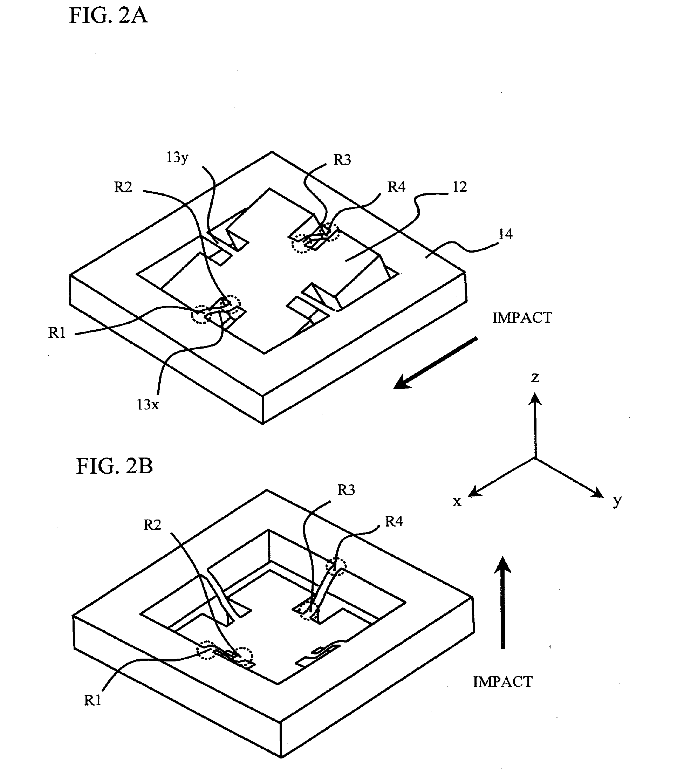

Fig. 2A is a perspective view of the sensing portion in the case where the impact is applied in an x direction;
Fig. 2B is a perspective view of the sensing portion in the case where the impact is applied in the z direction;

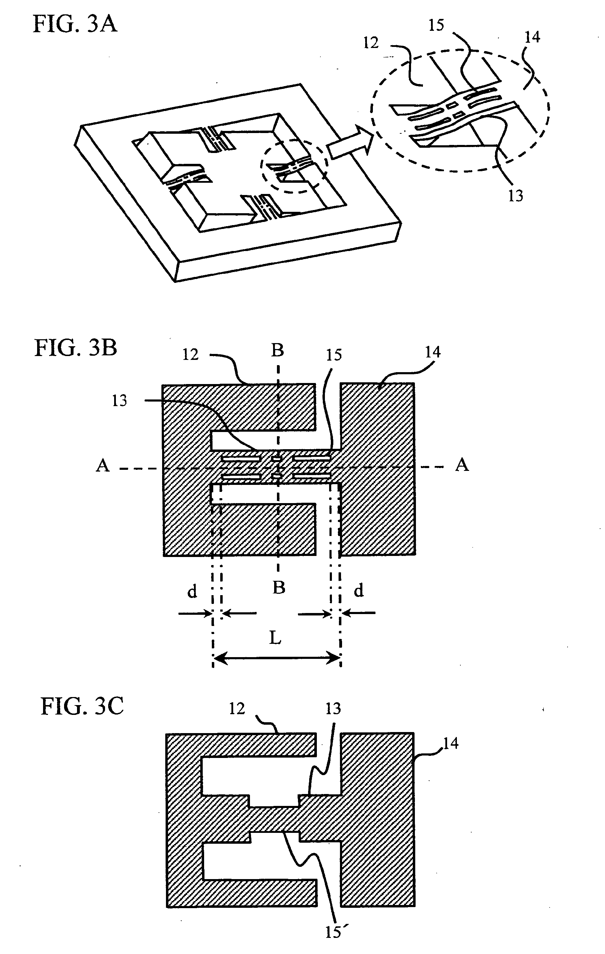

Figs. 3A through 3C illustrate the holes provided on the beam in the sensing portion of the inertial sensor in accordance with the present invention;
Fig. 3A is a perspective view of the sensing portion;
Fig. 3B is a top view around the beam showing the holes on the beam;
Fig. 3C is a top view around the beam having a narrow width portion;

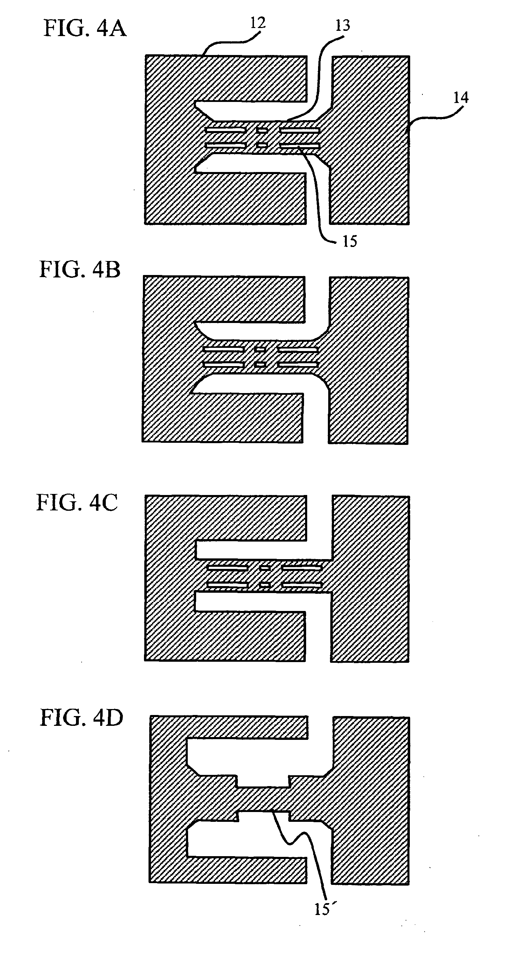

Figs. 4A through 4D illustrate the shapes of the roots in the beam;
Fig. 4A is a first example;
Fig. 4B is a second example;
Fig. 4C illustrates the conventional root shape;
Fig. 4D illustrates a root shape having the narrow width portion;

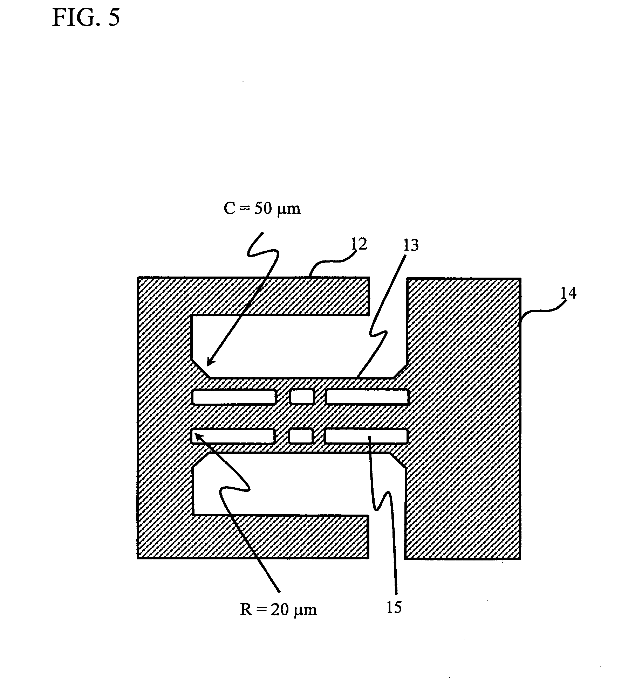

Fig. 5 illustrates the root shape having tapers C and the holes having a round shape R provided in the beam;

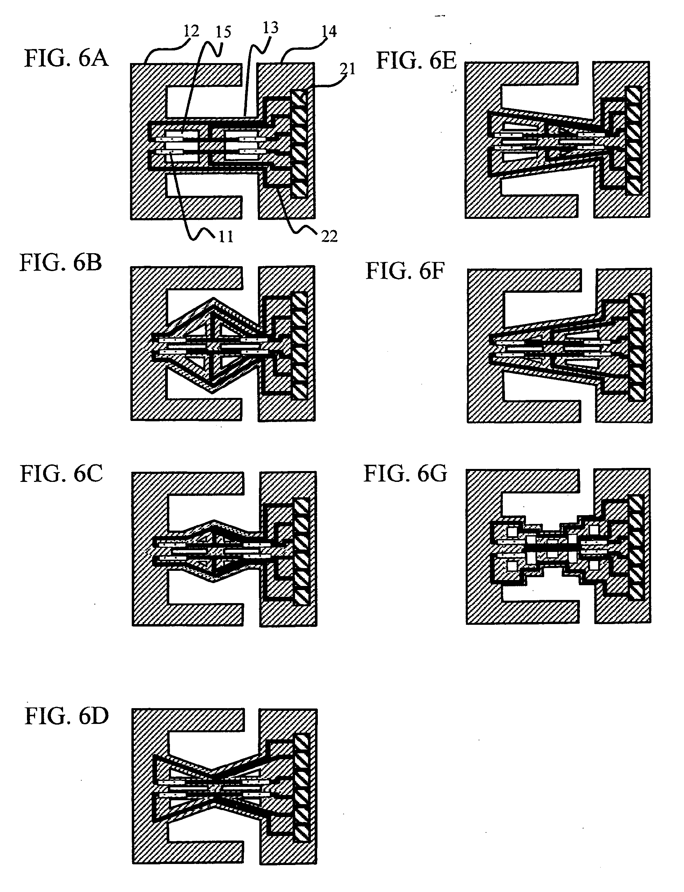

Figs. 6A through 6G illustrate examples of beam shapes;

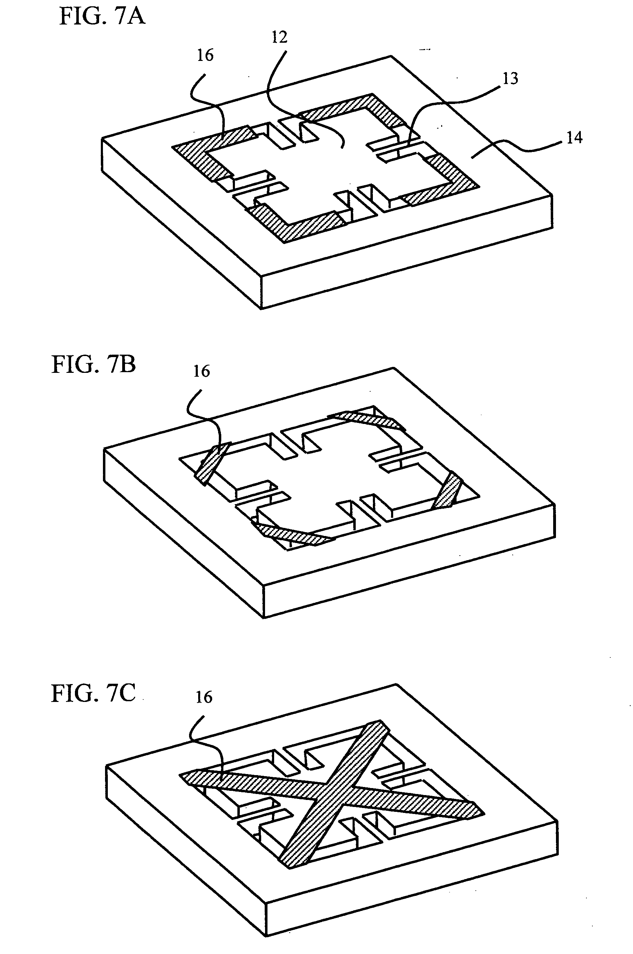

Figs. 7A through 7C illustrate examples of weight stoppers included in the inertial sensor in accordance with the present invention; and

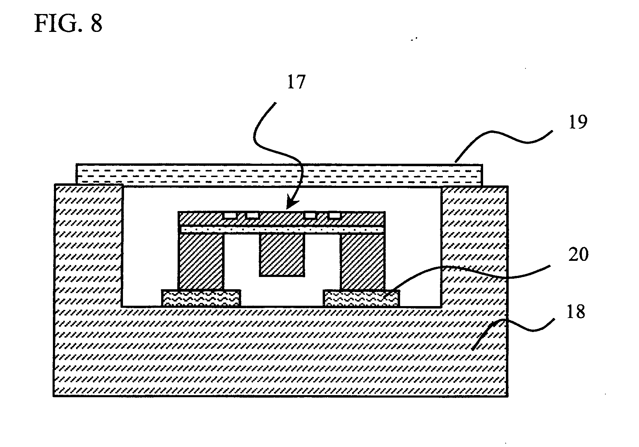

Fig. 8 is a cross-sectional view of the inertial sensor having the weight stoppers provided on a cap of a package and on a bottom surface of the package.

### DESCRIPTION OF THE PREFERRED EMBODIMENTS

A description will now be given, with reference to the accompanying drawings, of embodiments of the present invention.

A sensing portion in an inertial sensor in accordance with the present invention has a configuration same as that shown in Fig. 1. The sensing portion is incorporated into a silicon substrate by the MEMS technique. This sensing portion is mounted on a fixed member such as a glass substrate and is hermetically sealed into a package to serve as a device.

### (First embodiment)

In order to improve the sensitivity of the inertial sensor, the beam width is made small, the thickness is made thin, the length is made long, and the weight of the weigh is made heavy. In addition, the beams are configured to have holes so that the beams can be distorted easily. However, the beams are distorted by the impact, and the stresses are not evenly distributed. If the holes are provided on a part on which the stress is concentrated, the mechanical strength of the beams is degraded. Therefore, distortion portions are provided in the beams of a sensing portion of the inertial sensor in accordance with the present invention. The distortion portion, such as a concave portion configured to be thin, is arranged effectively and appropriately, and thus, the high sensitivity is obtainable together with the impact resistance.

A description will first be given of the stress generated in the beam when the impact is applied. When the impact is applied to the sensing portion, the beam is largely distorted by the impact and the stress is generated inside the beam.

Figs. 2A and 2B illustrate how the beam is distorted when the impact is applied to the inertial sensor. Fig. 2A is a perspective view of the sensing portion in the case where the impact is applied in an x direction. Fig. 2B is a perspective view of the sensing portion in the case where the impact is applied in a z direction. In the case where the impact is applied in the x direction, the weight 12 swings around a beam 13y as an axis, and a beam 13x, extending in the x direction, bend significantly. Here, in the beam 13x, roots R1 and R4 arranged on a side of the frame 14 and roots R2 and R3 arranged on a side of the weight 12 bend most significantly, and the stresses are concentrated on those roots. In the case where the impact is applied in the z direction, all the four beams 13 bend. The roots R1 and R4 arranged on a side of the frame 14 and the roots R2 and R3 arranged on a side of the weight 12 bend most significantly, and the stresses are concentrated on those roots.

As described, in the case where the impact is applied from the outside, the stresses are concentrated on the roots of the beam 13. The roots of the beam 13 are easy to be broken by the impact. Thus, the inertial sensor in accordance with the present invention includes the distortion portion, which is arranged to avoid areas on which the stresses are concentrated. The distortion portion such as the concave portion is configured to be partially thin in the beam thickness. In the case where the concave portion is provided as the distortion portion, the thickness of the concave portion is determined to consider the conditions including the length and the width of the beam, the impact resistance to be obtained, and the width of the concave portion. Holes may be provided on the beam. A description will be given of the case where holes are provided in the beam.

Figs. 3A through 3C illustrate the holes provided in the beam in the sensing portion of the inertial sensor in accordance with the present invention. Fig. 3A is a perspective view of the sensing portion. Fig. 3B is a top view around the beam to show the holes on the beam. The beam 13 is provided between the weight 12 and the frame 14. Holes 15 are arranged to avoid the roots of the beam 13. It is thus possible to distort the beam 13 without degrading the mechanical strength of the beam on which the stresses are concentrated. This makes it possible to enhance the sensor capabilities without degrading the impact resistance.

The above-mentioned holes are provided to avoid the roots having a depth d in the total length L of the beam 13. Preferably, the holes 15 are arranged symmetrically with respect to canter lines A-A and B-B in the beam 13. Also preferably, the width d is configured as small as possible in view of the enhancement in the sensor sensitivity. The width d is determined to be as small as possible in consideration of the required impact resistance. Six holes, which are arranged in Fig. 3A, show one example of arrangement. The number and the shape of the holes may be designed and optimized in consideration of the relationship with interconnections or the like provided in the beam 13.

The inventors performed the confirmation experiments and confirmed that the above-mentioned holes were capable of improving the sensor sensitivity approximately twice and there was no difference in the impact resistance with or without the holes, in comparing the inertial sensors having the sensing portions with and without the above-mentioned holes. The piezoelectric acceleration sensor that detects the changes in the stress was especially compared. Thus, the high sensitivity can be achieved without degrading the impact resistance. As shown in Fig. 3C, for example, instead of or together with the holes in the beam, a narrow width portion 15' may be provided symmetrical with respect to a direction extending along a center of the beam 13 and symmetrical with respect to a longitudinal extending along a center of the beam 13 and another direction perpendicular to the longitudinal direction, to avoid the edges on which the stresses are concentrated. With the narrow width portion 15', the beam is easy to get distorted in a y-axis direction, when the acceleration is applied to an x-axis direction. It is thus possible to enhance the sensitivity.

### (Second embodiment)

The description has been given of the roots of the sensing portion, which are identical to those of the conventional sensing portion. In view of the improvement of the impact resistance, the mechanical strength of the beam needs to be enhanced in a positive manner. In accordance with a second embodiment of the present invention, the shapes of the roots (edges), on which the stresses are concentrated, in the sensing portion are configured to improve the impact resistance of the sensor.

Figs. 4A through 4D illustrate the shapes of the roots in the beam. Fig. 4A is a first example of the roots. Fig. 4B is a second example. Fig. 4C illustrates the conventional shape. The conventional beam has a root shape of a right angle between the weight 12 and the frame 14, as shown in Fig. 3B of the first embodiment of the present invention. However, in accordance with the second embodiment of the present invention, instead of the right angle, the beam 13 is configured to have angles wider than the right angle by arranging tapers shown in Fig. 4A or by forming the roots roundly shown in Fig. 4B. By providing the root shape as described, the areas on which the stresses are concentrated can be dissipated and the impact resistance can be enhanced.

In the case where the roots have the angles wider than the right angle as shown in Fig. 4A, the impact resistance can be enhanced. In the case where the roots are formed roundly to have round shapes as shown in Fig. 4B, it is more effective to improve the impact resistance.

Referring to Fig. 5, it is more effective in the case where the root has tapers C, here C is 50 µm, and the beam has holes R, here R is 20 µm.

The effect of the improvement in the impact resistance is obtainable separately from the effect of the improvement in the sensor sensitivity obtained by arranging holes in the beam. It is thus obvious that the impact resistance can be improved without providing the holes in the beam and the root shape having the angle smaller than the right angle in the outline thereof. The above-mentioned effect is also obtainable in the case where the narrow width portion 15' is provided instead of or together with the beam holes shown in Fig. 4D.

### (Third embodiment)

Figs. 6A through 6G illustrate examples of the beam shape included in the inertial sensor in accordance with the present invention. The holes 15 are provided symmetrical with respect to a longitudinal direction extending along the center of the beam 13 and another direction perpendicular to the longitudinal direction extending along the center of the beam 13. The piezoelectric resistors 11 are arranged on the beam 13 to avoid the holes 15. The frame 14 includes electrodes 21 and interconnections 22. The piezoelectric resistors 11 are connected with the electrodes 21 and the interconnections 22 and output the changes in the resistance value caused resulting from the movement of the weight 12, to the Wheatstone bridge circuit, not shown.

### (Fourth embodiment)

In accordance with a fourth embodiment of the present invention, a weight stopper is provided to limit the movable range of the weight in the sensing portion in order to enhance the impact resistance of the inertial sensor having the beam in accordance with the first through third embodiments of the present invention.

Figs. 7A through 7C illustrate a weight stopper 16 included in the inertial sensor in accordance with the fourth embodiment of the present invention. The weight stopper 16 is processed by the MEMS technique, and is arranged in the vicinity of the sensing portion at a certain clearance. In the case where the weight stopper 16 is provided, the weight stopper 16 is capable of preventing the movement of the weight 12, if the weight 12 moves excessively more than a variation amount corresponding to a predetermined sensing range. This can avoid a problem of the malfunction of the beam 13 as a sensor. The problem is caused resulting from an accidental big impact.

Fig. 8 is a cross-sectional view of the inertial sensor having the weight stoppers provided on a cap 19 of the package and on a bottom surface of the package. The sensing portion 17 is attached to the bottom surface of the package 18 by an adhesive agent. The cap 19 is attached on the package 18. The weight stoppers 16 are provided on the cap 19 of the package and on the bottom surface of the package.

The top surface and the bottom surface of the sensing portion of the weight 12 may have plane surfaces, however, may have protrusions thereon. In the case where the protrusions are provided, an effective clearance is a gap between apical surfaces of the protrusions and a weight stopper surface facing the protrusions. Thus, even in the case where a distance between the weight and the weight stopper is provided relatively large, there is an advantage in that the impact resistance can be improved. In contrast, the protrusions may be provided on the weight stopper facing the weight.

In addition, the clearance between the weight stopper and the sensing portion (weight) is arranged narrowly, the impact resistance can be enhanced. However, the movable range of the weight becomes narrow and a dynamic range of the sensor becomes narrow. In contrast, in the case where the clearance is arranged widely, the movable range of the weight becomes wide and the dynamic range of the sensor becomes wide. However, if the dynamic range becomes too wide, the weight stopper does not function effectively and the expected impact resistance is not obtainable. Thus, the clearance between the sensing portion and the weight stopper included in the inertial sensor in accordance with the present invention is determined to satisfy the dynamic range of the sensor and the expected impact resistance. Preferably, the clearance is arranged as narrow as possible. This is because if the clearance is arranged more than necessary, the weight significantly gets accelerated due to the accidental impact before the weight stopper limits the movement. The weight might be damaged when hitting the weight stopper.

In accordance with the present invention, it is possible to enhance the sensor sensitivity without degrading the impact resistance of the sensor. It is also possible to enhance the impact resistance without sacrificing the sensor sensitivity. The high sensitivity is thus obtainable together with the impact resistance of the sensor.

The present invention is not limited to the above-mentioned embodiments, and other embodiments, variations and modifications may be made without departing from the scope of the present invention.

The present invention is based on Japanese Patent Application No. 2004-099250 filed on March 30, 2004, the entire disclosure of which is hereby incorporated by reference.

## Claims

1. An inertial sensor comprising a sensing portion having a weight hung by beams extending from a frame, the weight being a movable portion,
wherein:
the beams include distortion portions partially arranged therein; and
the distortion portions are arranged to avoid edges on which stresses applied to the beams are concentrated.

2. The inertial sensor as claimed in claim 1, wherein the distortion portions have partially concave shapes.

3. The inertial sensor as claimed in claim 1, wherein the distortion portions include holes formed in the beams.

4. The inertial sensor as claimed in claim 1, wherein the distortion portions are narrow width portions arranged in given areas of the beams.

5. The inertial sensor as claimed in claim 1, wherein the distortion portions in each of the beams are symmetrically arranged with respect to a longitudinal direction extending along a center of the beam and another direction perpendicular to the longitudinal direction.

6. The inertial sensor as claimed in claim 1, further comprising a weight stopper provided in a vicinity of the sensing portion to limit a movable range of the weight within a given range.

7. An inertial sensor comprising a sensing portion having a weight hung by beams, the weight being a movable portion,
wherein the beams have given areas in edges thereof having angles wider than a right angle.

8. The inertial sensor as claimed in claim 7, wherein the edges of the beams form curved outlines.

9. The inertial sensor as claimed in claim 7, wherein:
the beams include distortion portions partially arranged therein; and
the distortion portions are arranged to avoid edges on which stresses applied to the beams are concentrated.

10. The inertial sensor as claimed in claim 7, further comprising a weight stopper provided in a vicinity of the sensing portion to limit a movable range of the weight within a given range.
